# EUROPEAN PATENT APPLICATION

(11) **EP 2 866 501 A1**
(43) Date of publication of application: **29.04.2015**
(21) Application number: 14190137.1
(22) Date of filing: 23.10.2014
(51) Int. Cl.: H04W 52/02

(54) **Energy-efficient wireless sensing for asynchronous event monitoring**

(30) Priority: 25.10.2013 US 201361895546 P; 06.02.2014 US 201414173955
(71) Applicant: Simmonds Precision Products, Inc., Vergennes, VT 05491 (US)
(72) Inventor: Lynch, Michael Anthony, Shelburne, VT 05482 (US); Zakrewski, Radoslaw, South Burlington, VT 05403 (US)
(74) Representative: Hall, Matthew Benjamin

(57) **Abstract**

A sensor node (104), having a radio frequency (RF) transceiver (208), receives (406) a data acquisition command from a network controller. The command includes various parameters. The RF transceiver is deactivated (408) and data is obtained (410) based on the parameters included in the command. The RF transceiver is activated (416) and an inquiry message is sent (418) to the network controller requesting (422) the network controller to confirm that an event of interest has occurred during the data acquisition time interval. A subset of the obtained data containing the event of interest is transmitted (424) to the network controller, using the RF transceiver, in response to receiving a confirmation from the network controller that an event of interest has occurred. Otherwise the RF transceiver is deactivated (426) and no data is transmitted, in response to receiving from the network controller a negative acknowledgment message indicating that an event of interest has not occurred during the data acquisition interval.

## Description

### FIELD OF THE INVENTION

The disclosed embodiments generally relate to wireless sensor systems, and more particularly, to energy-efficient wireless sensor systems for asynchronous event monitoring.

### BACKGROUND OF THE INVENTION

A wireless sensor network (WSN) is a network system formed by one or more wireless network controllers and a plurality of sensors, in which the communication among the elements adopts a wireless communication manner.

The potential applications of the WSN are quite wide, including, for example, military battlefield scouting, environmental pollution monitoring, weather information collection, health/medical nursing, traffic flow observation, factory automation control, and the like.

Sensing events from dynamic environments are normally asynchronous and non-repeatable. However, the growth in the market has been hindered by the lack of a suitable energy source for the wireless sensor that would allow the sensor to operate for a longer period of time without the need to replace or recharge energy sources. To date, there are known techniques that harvest energy from the environment. However, these techniques may not always produce enough energy to satisfy the needs of a wireless sensor.

In a WSN, loss of energy occurs in three domains, namely, sensing, data processing and storage, and data communication. However, the losses during data communication are considered to be a major factor of the network life. Typically, a radio frequency (RF) transceiver is the most energy inefficient part of a wireless sensor. The electrical components of the wireless sensor that are used to acquire and store data are typically at least two orders of magnitude lower in energy consumption than the RF transceiver.

### SUMMARY OF THE INVENTION

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings.

In accordance with a purpose of the illustrated embodiments, in one aspect, a method for collecting data in a network from a remote wireless sensor is provided. A wake-up signal is transmitted from the network to a wireless sensor. The wake-up signal activates a radio frequency (RF) transceiver in the wireless sensor and provides instructions to collect certain data from the sensor at a first prescribed time. The RF transceiver is deactivated while the sensor collects data during the prescribed time period. The RF transceiver is activated at a second prescribed time to communicate with the network to determine if an event has occurred while data is being collected by the wireless sensor. A subset of the collected data associated with the event of interest is sent to the network if it has been determined the event has occurred.

In another aspect, a method and system for transmitting data in a wireless sensor network is described, in which a sensor node, having a radio frequency (RF) transceiver, receives a data acquisition command from a network controller. The data acquisition command includes various parameters, such as a data acquisition time interval. After receipt of the message, the RF transceiver is deactivated and data is obtained based on the parameters included in the data acquisition command. At completion of the data acquisition interval the RF transceiver is activated and an inquiry message is sent to the network controller. The inquiry message requests the network controller to confirm that an event of interest has occurred during the data acquisition time interval. A subset of the obtained monitoring data containing the event of interest is transmitted to the network controller, using the RF transceiver, in response to receiving a confirmation from the network controller that an event of interest has occurred during the data acquisition time interval. Otherwise, the RF transceiver is deactivated, in response to receiving from the network controller a negative acknowledgment message indicating that an event of interest has not occurred during the data acquisition interval.

In further, optional aspects, a computer program product for collecting data in a network from a remote wireless sensor is provided. The computer program product comprises one or more computer-readable storage devices and a plurality of program instructions stored on at least one of the one or more computer-readable storage devices. The plurality of program instructions includes program instructions to transmit a wake-up signal from the network to a wireless sensor.

The wake-up signal activates a radio frequency (RF) transceiver in the wireless sensor with instructions to collect certain data from the sensor at a first prescribed time. The plurality of program instructions further includes program instructions to deactivate the RF transceiver while the sensor collects data during the prescribed time period. The plurality of program instructions further includes program instructions to activate the RF transceiver at a second prescribed time to communicate with the network in order to determine if an event has occurred while data is being collected by the wireless sensor. The plurality of program instructions further includes program instructions to send a subset of the collected data associated with the event of interest to the network if it has been determined the event has occurred.

### BRIEF DESCRIPTION OF THE DRAWINGS

The accompanying appendices and/or drawings illustrate, by way of example only, various non-limiting preferred embodiments in accordance with the present disclosure:
FIG. 1 illustrates a diagram of the wireless sensor network topology in which an illustrative embodiment of the present invention may be implemented;
FIG. 2 illustrates a block diagram of the electronic components of a sensor node of FIG. 1 in accordance with an illustrated embodiment of the present invention;
FIG. 3 is a flowchart of conventional operational steps for the sensor node of FIG. 1 used for periodic monitoring purposes during a typical full acquisition cycle;
FIG. 4 is a flowchart of energy-efficient operational steps for the sensor node of FIG. 1 in accordance with an illustrated embodiment of the present invention.

### DETAILED DESCRIPTION OF CERTAIN EMBODIMENTS

The illustrated embodiments are now described more fully with reference to the accompanying drawings wherein like reference numerals identify similar structural/functional features. The illustrated embodiments are not limited in any way to what is illustrated as the illustrated embodiments described below are merely exemplary, which can be embodied in various forms, as appreciated by one skilled in the art. Therefore, it is to be understood that any structural and functional details disclosed herein are not to be interpreted as limiting, but merely as a basis for the claims and as a representation for teaching one skilled in the art to variously employ the discussed embodiments. Furthermore, the terms and phrases used herein are not intended to be limiting but rather to provide an understandable description of the illustrated embodiments.

Unless defined otherwise, all technical and scientific terms used herein have the same meaning as commonly understood by one of ordinary skill in the art to which this invention belongs. Although any methods and materials similar or equivalent to those described herein can also be used in the practice of the illustrated embodiments, exemplary methods and materials are now described.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth.

It is to be appreciated the illustrated embodiments discussed below are preferably a software algorithm, program or code residing on computer useable medium having control logic for enabling execution on a machine having a computer processor. The machine typically includes memory storage configured to provide output from execution of the computer algorithm or program.

As used herein, the term "software" is meant to be synonymous with any code or program that can be in a processor of a host computer, regardless of whether the implementation is in hardware, firmware or as a software computer product available on a disc, a memory storage device, or for download from a remote machine. The embodiments described herein include such software to implement the algorithms described below. One skilled in the art will appreciate further features and advantages of the illustrated embodiments based on the below-described embodiments. Accordingly, the illustrated embodiments are not to be limited by what has been particularly shown and described, except as indicated by the appended claims.

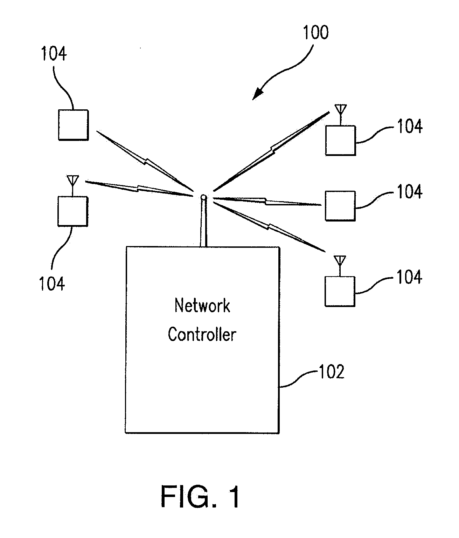

Turning now descriptively to the drawings, in which similar reference characters denote similar elements throughout the several views, Fig. 1 depicts a diagram of the wireless sensor network topology in which below illustrated embodiments may be implemented.

A generalized wireless environment in which the illustrated embodiments can be realized is depicted in FIG. 1 illustrating a WSN 100 which generally comprises at least one network controller 102 in selective communication with a plurality of sensor nodes 104. It can be seen that the present embodiment employs a "star" network topology with a single network controller 102 in communication with a plurality of sensor nodes 104. In the present embodiments, the network controller 102 and sensor nodes 104 communicate wirelessly. In an illustrative embodiment, each of the sensor nodes 104 communicates with the network controller 102, and all communication occurs via and through the network controller 102.

These devices, communicating through wireless technologies, transmit data to the network controller 102. In an embodiment of the present invention the network controller 102 may include a processor and transceiver (not shown). The network controller 102 may process the received sensor data and may send it to the desired location in real time. For example, the data received by the network controller 102 may be sent to an external base station that, using the Internet, forwards the sensed information to a hospital, military base, environmental agency or elsewhere.

For clarity and ease of description, the WSN 100 described above is illustrated and described assuming that each sensor node 104 is a member of a single network. However, it should be appreciated that one or more sensor nodes 104 in, for example, an ad-hoc wireless sensor network, could be a member of two or more wireless sensor networks (not illustrated). This multiplicity of network membership could occur simultaneously, or at only selected times during the life of a sensor node 104.

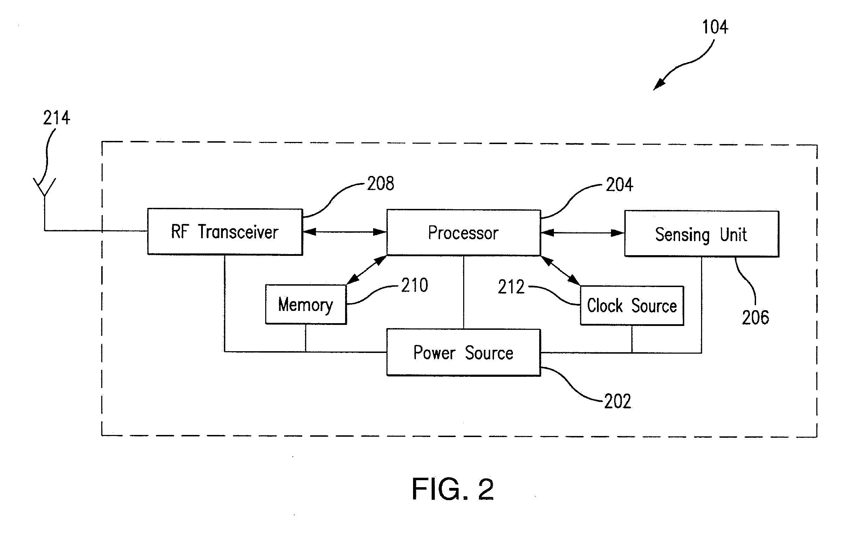

Referring now to FIG. 2 of the accompanying drawings, which shows a schematic block diagram of an exemplary sensor node 104 that may be used with one or more embodiments described herein. It can be seen that the sensor node 104 has a power source 202 for energizing a processor 204, a clock source 212, a sensing unit 206, a memory 210 and a RF transceiver 208, which communicates with an antenna 214.

The power source 202 may be any of numerous types of stand-alone electrical power sources. For example, the power source 202 may include one or more batteries and appropriate signal conditioning circuitry, or it may be a thermoelectric power source, or it may be a vibration-powered generator that converts mechanical power to electrical power. In a particular example, the power source 202 is implemented as a battery.

The processor 204 may be any one of numerous known general purpose processors or an application specific processor that operates in response to program instructions. Such program instructions may be stored in the memory 210. The processor 204 could comprise more than one distinct processing device, for example to handle different functions within the sensor node 104.

The memory 210 can be any form of memory device, for example, volatile or non-volatile memory, solid state storage device, magnetic device, and the like. It will be appreciated that the memory 210 may include either, or both, RAM (random access memory) and ROM (read only memory). It will be further appreciated that the memory 210 could be integrally formed as part of the processor 204.

The sensing unit 206 includes one or more sensors and appropriate signal conditioning circuitry. The sensor may be any one of numerous types of sensors including, but not limited to, a temperature sensor, a pressure sensor, a vibration sensor, a proximity sensor, or a combination thereof. The sensor senses one or more physical parameters at or near its location and generates a sensor signal representative of the sensed physical parameter (or parameters).

The processor 204 may be coupled to receive sensor data representative of the sensor signals supplied from each sensor that forms part of the sensing unit 206. In an embodiment of the present invention, the sensor data may be supplied to the processor 204 via a sensor interface (not shown in FIG. 2). The interface may be implemented in either hardware, software, or a combination of both, may be coupled to receive the sensor signals and may be configured to allow the processor 204 to receive and process sensor data from various types of sensors. It will be appreciated that this interface could be embedded in the processor 204. The processor 204, implementing appropriate processing software described below, may supply the received sensor data to the RF transceiver 208 via, for example, transceiver I/O, which may also be implemented in either software, hardware, or a combination of both. As will be discussed in more detail further below, the RF transceiver 208 may modulate and transmit the sensor data to the network controller 102, as commanded and controlled by the processor 204 and/or programming instructions being executed by the processor 204. The processor 204 may also implement various other command and control functions, some of which are based on data received from the RF transceiver 208. These additional command and control functions will be described in more detail further below. Before doing so, however, a more detailed description of the RF transceiver 208 will be provided.

The RF transceiver 208 may be implemented using any of numerous transceiver configurations, and in the depicted embodiments may include an I/O interface, an RF transmitter, and an RF receiver. As previously indicated, the I/O interface may function to provide control and data transfer between the processor 204 and the RF transceiver 208. The I/O interface, in response to commands from the processor 204, may control the overall functionality of the RF transceiver 208. For example, the I/O interface may configure the RF transceiver 208 to either transmit data or receive data. In some embodiments, the I/O interface may also control, among other things, the operating frequency, transmission power, and reference frequency of the RF transceiver 208.

The RF transmitter may receive data from the I/O interface, may modulate the data and, when commanded to do so by the I/O interface, may transmit the RF modulated data, via the RF antenna 214, to the network controller 102. The RF transmitter can be configured to implement any one of numerous types of RF modulation schemes, including for example, QPSK (Quartenary Phase Shift Key). However, in an exemplary embodiment the RF transmitter may be configured to implement BFSK (Binary Phase Shift Key). The RF transmitter may additionally be configured to implement any one of numerous types of multiple access schemes including, but not limited to, fixed-frequency radio transmission, Time Division Multiple Access (TDMA), Frequency Division Multiple Access (FDMA), Code Division Multiple Access (CDMA), Direct Sequence Spread Spectrum (DSSS) radio transmission, Frequency Hopping Spread Spectrum (FHSS) or Orthogonal frequency-division multiplexing (OFDM).

The RF receiver, in response to commands from the I/O interface may receive RF modulated data from the network controller 102, via the antenna 214. The RF receiver may demodulate the received RF modulated data and may supply the demodulated data to the I/O interface.

The RF transceiver 208 may be implemented using discrete components, integrated circuit components, or a combination thereof, and to operate at any one, or multiple, frequencies in the RF spectrum. Moreover, if implemented using an integrated circuit, the RF transceiver 208 may be any one of numerous known transceiver integrated circuits or an application specific integrated circuit.

In an exemplary embodiment, the sensor node 104 may further include a clock source 212. The clock source 212 may include a system clock circuit. The clock source 212 may also include time and date capabilities such as a Real Time Clock (RTC) and at least one timeout unit for evaluating timers or timeout conditions, in response to instructions received from the processor 204.

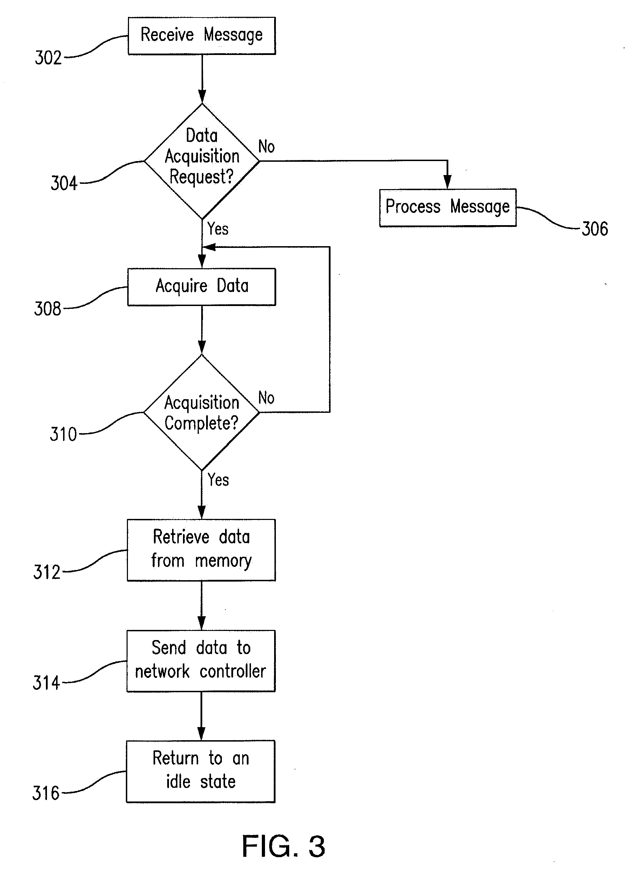

With reference now to FIG. 3, a flowchart of conventional operational steps for the sensor node of FIG. 1 during atypical full acquisition cycle is shown. A typical full data acquisition cycle for the sensor node 104 used for periodic monitoring purposes starts with receiving, at step 302, a message from the network controller 102. As previously indicated, the network controller 102 may be configured to send various control messages to one or more sensor nodes 104 included in the WSN 100. At step 304, the sensor node 104 determines whether the received message is a data acquisition request, for example, by interpreting one or more commands contained within the message. In response to determining that the received message is not a data acquisition request (step 304, no branch), the sensor node 104 processes the received message according to the message content. However, if the sensor node determines that the received message is a data acquisition command (step 304, yes branch), the sensor node 104 begins acquiring sensor data, preferably using sensing unit 206, at step 308. At least in some implementations, the sensor node 104 may store all of the captured sensor data in the memory 210. The data acquisition may occur at precise increments in time, such as, for example, but not limited to, sampling rate. The sensor node 104 may accomplish acquiring data after regular intervals of time through the use of the internal clock source 212.

Periodically, at step 310, the sensor node 104 checks whether the data acquisition is complete. If the sensor node 104 determines that the data acquisition is not complete (step 310, no branch), the sensor node 104 continues acquiring sensor data, at step 308. In response to determining that the data acquisition is complete (step 310, yes branch), the sensor node 104, at step 312, retrieves all of the acquired data from the memory 210. Next, at step, 314, the sensor node 104 sends the data to the network controller 102 via the RF transceiver 208, as described above. Once the transmission is complete, at step 316, the sensor node 104 finishes the data acquisition cycle and returns to an idle state. The idle state is a state in which energy consumption is less than during normal operating conditions (i.e. data acquisition cycle). In other words, the sensor node 104 waits for the next data acquisition cycle to begin. In an alternative implementation, the sensor node 104 may not store the acquired data in the memory 210, but may instead transmit the acquired data to the network controller 102 in real time. As previously indicated, the sensor node 104 may send the acquired data using the RF transceiver 208.

It is noted that the amount of energy consumed by the sensor node 104 during the full data acquisition cycle described above comprises a sum of the energy consumed by the electrical components (such as processor 204, sensing unit 206, clock source 212, and memory 210) used during the data acquisition period and the energy consumed by the RF transceiver 208 during step 314. One skilled in the art will appreciate that if the duty cycle of the sensor node 104 used for periodic monitoring purposes is kept very low and the use of the RF transceiver 208 is minimized, the total amount of energy consumed by the sensor node 104 over a prolonged period of time may be significantly reduced. However, when the sensor node 104 is used for monitoring asynchronous events, such as weather and/or traffic conditions, it may be difficult to predict in advance when the sensor node 104 should be actively acquiring data. In some cases such sensor node 104 may need to acquire sensor data for much longer periods of time, as compared to the periodic monitoring cycle described above, or even continuously until an event of interest is detected, assuming that the sensor has the capability to detect the event of interest autonomously.

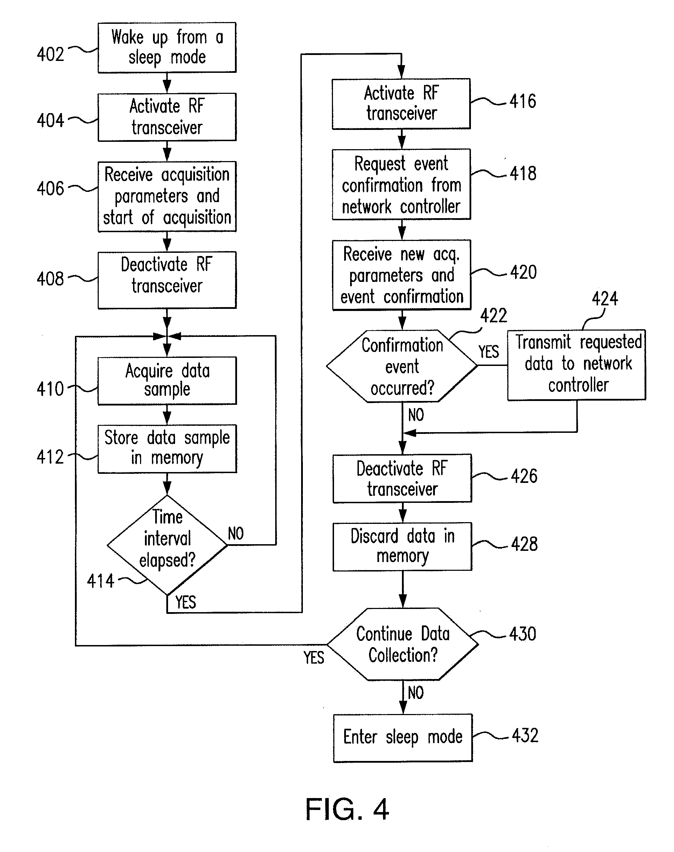

With reference now to FIG. 4, shown is a flow chart demonstrating implementation of the energy efficient operational steps for the wireless sensor of FIG. 1, which may be used for monitoring asynchronous events, in accordance with an illustrated embodiment. It is noted that the order of steps shown in FIG. 4 is not required, so in principle, the various steps may be performed out of the illustrated order. It is also noted that the illustrated steps may be implemented as a software module stored in the memory 210. It will be appreciated that this software module, or at least portions thereof, may also be implemented in hardware, firmware, or a combination thereof.

According to an embodiment of the present invention, at step 402, sensor node 104, may wake up from a sleep mode. As used herein, the term "sleep mode" can mean any conventional low power consumption mode, such as a sleep mode, standby mode, suspend mode, or other similar mode wherein the sensor node 104 attempts to conserve power by turning off the RF transceiver 208, sensing unit 206 and/or other functions that are not necessary, and from which the sensor node 104 can switch to an active mode. Once in a sleep mode, the sensor node 104 may exit or "wake-up" from the sleep mode in response to the occurrence of one or more conditions. For example, the sensor node 104 may wake-up in response to an external reset signal, a watchdog timer, or any predetermined timer, timing out, and the like. In short, various embodiments of the present invention contemplate that any conventional technique for waking up the sensor node 104 from the sleep mode may be implemented at step 402. At step 404, the sensor node 104 preferably activates the RF transceiver 208.

Next, at step 406, the sensor node 104 may receive a start of acquisition command message from the network controller 102. The content of the start of acquisition command message may include some specifications, including, but not limited to, data collection parameters. For example, the data collection parameters may include data acquisition start time, data acquisition time interval, sampling rate, and the like. In addition, at step 406, the sensor node 104 may generate an acknowledgment message for acknowledging the receipt of the start of acquisition command. At step 408, the sensor node 104 may deactivate the RF transceiver 208 in order to reduce the amount of energy consumed by the RF transceiver 208. As previously indicated, the RF transceiver 208 is typically the most energy consuming component of the sensor node 104.

After deactivating the RF transceiver 208, at step 410, the sensor node 104 may start acquiring sensor data at the specified start time based on the parameters included in the start of acquisition command. The sensor node 104 may capture the sensor data using the sensing unit 206 described above. While the sensing unit 206 continues to collect sensor data, at step 412, the sensor node 104 may store the acquired data, for example, in the internal memory 210 at the specified sampling rate. In an embodiment of the present invention, the memory 210 may comprise non-volatile memory, such as, for example, but not limited to, non-volatile random access memory (NVRAM).

Among the parameters included in the start of acquisition command, the sensor node 104 may receive from the network controller 102 a time interval parameter specifying a period of time in which the sensor node 104 may reactivate the RF transceiver 208. Accordingly, at step 414, the sensor node 104 may check the internal clock source 212 to determine if the specified period of RF transceiver's 208 inactivity has elapsed. If not (step 414, no branch), the sensor node 104 may repeat steps 410 and 412 iteratively until the specified time interval elapses. In response to determining that the specified period of RF transceiver's 208 inactivity has elapsed (step 414, yes branch), at step 416, the sensor node 104 may activate the RF transceiver 208. Next, at step 418, the sensor node 104 may request a confirmation from the network controller 102 whether an event of interest has occurred during the preceding data acquisition period. Embodiments of the present invention contemplate that the sensor node 104 does not have the capability to recognize when the desired asynchronous event occurs. Rather, another element of the WSN 100, such as the network controller 102, may be capable of recognizing the events of interest. The specific events of interest may vary depending on the application of the WSN 100.

Upon receiving the aforementioned confirmation message, the network controller 102 may respond with either an affirmative message, which may include a request for a subset of the acquired sensor data related to the event of interest, or a negative message with instructions to the sensor node 104 on how to proceed. At step 420, the sensor node 104 may receive either the affirmative or the negative message. In addition, at step 420, the sensor node 104 may receive new data acquisition parameters described above in conjunction with step 406. At step 422, the sensor node 104 may determine whether an event of interest has occurred based on the type of message received at step 420. In response to determining that an event of interest has occurred (step 422, yes branch), at step 424, the sensor node 104 may transmit the requested data to the network controller 102 using the RF transceiver 208. According to an embodiment of the present invention, data transmitted to the network controller 102 may include a subset of the acquired data. This subset may include only data related to the event of interest. In response to receiving the subset of the acquired data, the network controller 102 may acknowledge receipt of the requested data. At least in some embodiments of the present invention, the network controller may also send a control message instructing the sensor node 104 to enter a sleep mode, as discussed further below in relation to step 432.

In response to determining that an event of interest has not occurred (step 422, no branch) or after transmitting the requested data, at step 426, the sensor node 104 may deactivate the RF transceiver 208. In addition, since the network controller 102 expressed no interest in any data collected and stored during the preceding data acquisition period or since the subset of the acquired data related to the event of interest has been already transmitted, at step 428, the sensor node 104 may permanently discard data stored in the memory 210. The discarding may include, for example, but not limited to, deallocating one or more regions of the memory 210 previously allocated to store data obtained during the preceding data acquisition period.

According to an embodiment of the present invention, at step 430, the sensor node 104 may further examine the content of the messages received at step 420 for additional instructions on how to proceed with the data collection process. In response to determining that the network controller 102 has instructed to continue the data acquisition process (step 430, yes branch), the sensor node 104 may return back to step 410 and may instruct the sensing unit 206 to continue acquiring sensor data. In response to determining that the network controller 102 has not instructed the sensor node 104 to continue the data acquisition process (step 430, no branch), the sensor node 104 may next enter the sleep mode in order to conserve energy, at step 432. Embodiments of the present invention contemplate that the network controller 102 may instruct the sensor node 104 to enter the sleep mode if the event of interest has not occurred during the preceding data acquisition period and if the environmental conditions indicate that the event of interest is unlikely to occur before the next time period in which the sensor node 104 is scheduled to wake up. According to an embodiment of the present invention, the instructions to enter the sleep mode may provide information indicating to the sensor node 104 when it needs to wake up again. In response to processing such information, the sensor node 104 may instruct the internal clock source 212 to set up a corresponding timer.

In summary, the illustrated embodiment of the present invention describes a method and system for transmitting data in a wireless sensor network. This method discloses a technique whereby a wireless sensor, such as the sensor node 104, monitoring asynchronous events acquires data in an energy efficient mode through limiting the period of time the RF transceiver 208 is active in the sensor node 104. According to an embodiment of the present invention, the sensor node 104 may reuse the internal memory 210, if after a predetermined period of time the event of interest has not occurred. This reallocation of memory process, advantageously, may virtually extend a limited size of the internal memory 210. In addition, the disclosed method of communication between the sensor node 104 and the network controller 102 allows the sensor node 104 to save energy because only the subset of the acquired data that is determined to be related to and/or contain the event of interest is transmitted to the network controller 102 via the RF transceiver 208.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages.

Aspects of the present invention are described above with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a device to function in a particular manner, such that the instructions stored in the computer readable medium produce an article of manufacture including instructions which implement the function/act specified in the flowchart and/or block diagram block or blocks. The computer program instructions may also be loaded onto a device to cause a series of operational steps to be performed on the device to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments as defined by the claims. The terminology used herein was chosen to best explain the principles of the embodiments, the practical application or technical improvement over technologies found in the marketplace, or to enable others of ordinary skill in the art to understand the embodiments disclosed herein.

## Claims

1. A computer implemented method for collecting data in a network (100) from a remote wireless sensor (104), comprising
transmitting a wake-up signal from the network to a wireless sensor which activates a radio frequency (RF) transceiver (208) in the wireless sensor with instructions to collect (308; 410) certain data from the sensor at a first prescribed time;
deactivating (408) the RF transceiver while the sensor collects data during the prescribed time period;
activating (416) the RF transceiver at a second prescribed time to communicate with the network to determine (422) if an event has occurred while data is being collected by the wireless sensor; and
sending (314; 424) a subset of the collected data associated with the event of interest to the network if it has been determined the event has occurred.

2. A computer implemented method as recited in claim 1 further comprising deactivating (426) the RF transceiver subsequent to the data being sent to the network whereafter the sensor is placed (432) in a sleep mode.

3. A computer implemented method as recited in claim 1 further comprising deactivating (426) the RF transceiver and permitting (428) the collected data in sensor memory to be overwritten if an event has not occurred when the RF transceiver is activated at the second prescribed time and/or permitting (430) the sensor to collect data in memory after it is determined an event has not occurred, preferably further comprising activating the RF transceiver at a third prescribed time to communicate with the network to determine if an event has occurred while data is being collected by the wireless sensor.

4. A computer implemented method as recited in claim 3 further comprising instructing (422) the sensor to cease collecting data in memory after it is determined an event has not occurred.

5. A method for transmitting data in a wireless sensor network (100), the method comprising the steps of:
receiving (302), by a sensor node having a radio frequency (RF) transceiver (208), a data acquisition command from a network controller (102), the data acquisition command including one or more parameters;
obtaining (308; 410) data based on the one or more parameters;
activating (416) the RF transceiver and sending (418) an inquiry message to the network controller, wherein the inquiry message requests the network controller to confirm that an event of interest has occurred during a data acquisition time interval;
transmitting (314; 424) to the network controller, using the RF transceiver, a subset of the obtained data, in response to receiving (422) a confirmation from the network controller that an event of interest has occurred during the data acquisition time interval; and
deactivating (426) the RF transceiver, in response to receiving from the network controller a negative acknowledgment message indicating that an event of interest has not occurred during the data acquisition interval.

6. The method of claim 5, further comprising entering a sleep mode (432), in response to receiving the negative acknowledgement and in response to receiving (430) from the network controller an instruction to enter the sleep mode; preferably further comprising waking up (402) from the sleep mode prior to the receiving (406) the data acquisition command.

7. The method of claim 5 or 6, wherein the one or more parameters include the data acquisition time interval, a data acquisition start time, a sampling rate, and the like.

8. The method of claim 5, 6 or 7, further comprising storing the obtained monitoring data in a memory (210) of the sensor node, preferably wherein the memory comprises a non-volatile memory.

9. The method of claim 8, further comprising discarding (428) the obtained data stored in the memory, in response to receiving (422) the negative acknowledgment message from the network controller.

10. The method of any one of claims 5 to 9, wherein the subset of the obtained data comprises data associated with the event of interest.

11. A computer program product for collecting data in a network (100) from a remote wireless sensor (104), the computer program product comprising:
one or more computer-readable storage devices and a plurality of program instructions stored on at least one of the one or more computer-readable storage devices, the plurality of program instructions comprising:
program instructions to transmit a wake-up signal from the network to a wireless sensor which activates a radio frequency (RF) transceiver in the wireless sensor with instructions to collect certain data from the sensor at a first prescribed time;
program instructions to deactivate the RF transceiver while the sensor collects data during the prescribed time period;
program instructions to activate the RF transceiver at a second prescribed time to communicate with the network to determine if an event has occurred while data is being collected by the wireless sensor; and
program instructions to send a subset of the collected data associated with the event of interest to the network if it has been determined the event has occurred.

12. The computer program product of claim 11, further comprising program instructions to deactivate the RF transceiver subsequent to the data being sent to the network and program instructions to place the sensor in a sleep mode.

13. The computer program product of claim 11, further comprising program instructions to deactivate the RF transceiver and program instructions to permit the collected data in sensor memory to be overwritten if an event has not occurred when the RF transceiver is activated at the second prescribed time.

14. The computer program product of claim 13, further comprising program instructions to permit the sensor to collect data in memory after it is determined an event has not occurred; preferably further comprising program instructions to activate the RF transceiver at a third prescribed time to communicate with the network to determine if an event has occurred while data is being collected by the wireless sensor.

15. The computer program product of claim 13, further comprising program instructions to instruct the sensor to cease collecting data in memory after it is determined an event has not occurred.
